# EUROPÄISCHE PATENTANMELDUNG

(11) **EP 4 371 684 A1**
(43) Veröffentlichungstag der Anmeldung: **22.05.2024**
(21) Anmeldenummer: 22208257.0
(22) Anmeldetag: 18.11.2022
(51) Int. Cl.: B23B 27/16, B23Q 17/22

(54) **VERFAHREN ZUR DREHBEARBEITUNG**

(71) Anmelder: CERATIZIT Austria Gesellschaft m.b.H., 6600 Reutte (AT)
(72) Erfinder: SINGER-SCHNÖLLER, Alexander, 6600 Reutte (AT); TROST, Johannes, 6600 Reutte (AT); SCHMID, Lothar, 6600 Reutte (AT); MOOSBRUGGER, Alois, 6600 Reutte (AT)
(74) Vertreter: Ciesla, Dirk

(57) **Zusammenfassung**

Es wird ein Verfahren zur Drehbearbeitung in einer Bearbeitungsmaschine mit einem Werkzeug (100), das einen in einer maschinenseitigen Aufnahme gehaltenen Werkzeughalter (1) mit einem daran befestigten auswechselbaren Schneideinsatz (2) aufweist, der zumindest einen zur Drehbearbeitung eines um eine Rotationsachse (Z) rotierenden Werkstücks (W) nutzbaren Schneidkantenabschnitt (22; 22'; 22") mit zumindest einem abgerundeten Schneideckenbereich (22a) und zumindest einem an diesen Schneideckenbereich (22a) angrenzenden geraden ersten Schneidkantenbereich (22b) hat, derart, dass ein Anstellwinkel (κ), den der erste Schneidkantenbereich (22b) mit der Rotationsachse (Z) des Werkstücks (W) einschließt, durch eine Drehung des Werkzeughalters (1) um seine Längsachse (L) oder eine dazu parallele Achse variiert wird, bereitgestellt. Korrekturdaten (Δx, Δy, Δz, Δr), die toleranzbedingte Positionsabweichungen des Schneidkantenabschnitts (22; 22'; 22") repräsentieren, werden individuell für eine Mehrzahl von verschiedenen Anstellwinkeln (κ) gemessen und eine Ansteuerung des Werkzeugs (1) bei der Drehbearbeitung wird basierend auf den Korrekturdaten (Δx, Δy, Δz, Δr) in Abhängigkeit vom Anstellwinkel (κ) korrigiert.

## Beschreibung

Es werden ein Verfahren zur Drehbearbeitung in einer Bearbeitungsmaschine und ein Computerprogramm zum Ansteuern einer Drehbearbeitung in einer Bearbeitungsmaschine bereitgestellt.

Bei herkömmlichen Verfahren zur zerspanenden Bearbeitung von Werkstücken durch Drehen in einer Bearbeitungsmaschine kommen typischerweise Werkzeuge zum Einsatz, bei denen ein nutzbarer Schneidkantenabschnitt, der einen abgerundeten Schneideckenbereich und beidseitig an diesen angrenzende gerade erste und zweite Schneidkantenbereiche hat, unter einem vorgegebenen unveränderlichen Anstellwinkel, den der erste gerade Schneidkantenbereich mit einer Rotationsachse des zu bearbeitenden Werkstücks einschließt, ausgerichtet ist. Bei der Anwendung an CNC-(computer-numerically-controlled)-Bearbeitungsmaschinen und deren Steuerungen ist es üblich, die Hauptabmessungen des zum Einsatz kommenden Werkzeugs in einem Werkzeugspeicher der Steuerung zu definieren. Diese Daten sind essenziell, damit die Bewegungsabläufe des Werkzeugs, bei dem es sich z.B. um einen Werkzeughalter mit einem daran befestigten, auswechselbaren Schneideinsatz handeln kann, korrekt berechnet werden können. Die Hauptabmessungen sind dabei üblicherweise die Abstände des Schneideckenbereichs in drei zueinander orthogonalen Richtungen (X, Y, Z) von einem Bezugspunkt aus, die in einer Werkzeugtabelle eingetragen werden. In vielen Fällen dient dabei als Bezugspunkt ein Werkzeugnullpunkt, der z.B. im Achsenzentrum einer Werkzeugaufnahme liegt, bzw. ein axialer Anschlagpunkt für das Werkzeug. Zusätzlich ist es noch möglich, weitere Funktionsabmessungen, wie insbesondere z.B. einen Eckenradius des Schneideckenbereichs, zu definieren, damit die Berechnungen von Drehzyklen und Zerspanungsabläufen fehlerfrei funktionieren. Die in der Werkzeugtabelle eingetragenen Hauptabmessungen repräsentieren dabei üblicherweise zuvor ermittelte Abmessungen des Werkzeugs.

Aufgrund von verschiedenen Einflüssen, wie z.B. Maßabweichungen des Werkzeughalters, Maß- und Formabweichungen des Schneideinsatzes, Maßänderungen aufgrund von Werkzeugverschleiß, etc., stimmen die tatsächlichen realen Abmessungen des Werkzeugs jedoch häufig nicht exakt mit den in der Werkzeugtabelle eingetragenen Abmessungen überein. In CNC-Bearbeitungsmaschinen und deren Steuerungsprogrammen ist daher üblicherweise die Möglichkeit vorgesehen, die Differenz zwischen den realen Abmessungen und den eingetragenen Abmessungen des Werkzeugs als Korrekturwerte einzugeben, um diese Toleranzen auszugleichen. Die Messung der Abweichungen erfolgt dabei typischerweise zumindest in zwei zueinander orthogonalen Richtungen anhand der Vermessung von Tangenten an den Schneideckenbereich. Die Korrekturwerte liegen typischerweise in einer Größenordnung kleiner 1 mm, sodass es sich um eine Feinkorrektur handelt.

Zusätzlich zu den Abweichungen der realen Abmessungen des Werkzeugs von den eingetragenen Abmessungen des Werkzeugs können bei der Drehbearbeitung noch weitere Einflüsse, wie insbesondere Achsfehler der Bearbeitungsmaschine, elastische Auslenkungen zwischen Bearbeitungsmaschine, Werkzeug und Werkstück, etc., dazu führen, dass das bearbeitete Werkstück nach der Drehbearbeitung von dessen Soll-Abmessungen abweicht. Diese Abweichungen können bei der Drehbearbeitung durch eine Vermessung des erzeugten Werkstücks gemessen werden. Auch diese auftretenden Toleranzen können bei der Drehbearbeitung dadurch kompensiert werden, dass sie entsprechend in den Korrekturwerten abgebildet werden.

Obwohl sich diese Verwendung von Korrekturwerten bei herkömmlichen Verfahren zur Drehbearbeitung bewährt hat, stößt sie bei alternativen Verfahren zur Drehbearbeitung, die eine höhere Anzahl von Freiheitsgraden bei der Bearbeitung erlauben, an ihre Grenzen.

In der WO 2019/120824 A1 ist ein Verfahren zur Drehbearbeitung beschrieben, bei dem ein auswechselbarer Schneideinsatz stirnseitig auf einem Werkzeughalter angeordnet ist und eine Veränderung des Anstellwinkels durch eine Rotation des Werkzeughalters um seine Längsachse oder eine dazu parallele Achse ermöglicht ist.

Es ist Aufgabe der vorliegenden Erfindung, ein Verfahren zur Drehbearbeitung in einer Bearbeitungsmaschine und ein Computerprogramm bereitzustellen, die auch bei derartigen Drehbearbeitungen mit einer größeren Anzahl von Freiheitsgraden eine zuverlässige Korrektur von toleranzbedingten Positionsabweichungen ermöglichen.

Die Aufgabe wird durch ein Verfahren zur Drehbearbeitung in einer Bearbeitungsmaschine nach Anspruch 1 gelöst. Vorteilhafte Weiterbildungen sind in den abhängigen Ansprüchen angegeben.

Es handelt sich um ein Verfahren zur Drehbearbeitung in einer Bearbeitungsmaschine mit einem Werkzeug, das einen in einer maschinenseitigen Aufnahme gehaltenen Werkzeughalter mit einem daran befestigten auswechselbaren Schneideinsatz aufweist, der zumindest einen zur Drehbearbeitung eines um eine Rotationsachse rotierenden Werkstücks nutzbaren Schneidkantenabschnitt mit zumindest einem abgerundeten Schneideckenbereich und zumindest einem an diesen Schneideckenbereich angrenzenden geraden ersten Schneidkantenbereich hat, derart, dass ein Anstellwinkel, den der erste Schneidkantenbereich mit der Rotationsachse des Werkstücks einschließt, durch eine Drehung des Werkzeughalters um seine Längsachse oder eine dazu parallele Achse variiert wird, wobei Korrekturdaten, die toleranzbedingte Positionsabweichungen des Schneidkantenabschnitts repräsentieren, individuell für eine Mehrzahl von verschiedenen Anstellwinkeln gemessen werden und wobei eine Ansteuerung des Werkzeugs bei der Drehbearbeitung basierend auf den Korrekturdaten in Abhängigkeit vom Anstellwinkel korrigiert wird. Die individuelle Messung der Korrekturdaten für eine Mehrzahl von verschiedenen Anstellwinkeln kann z.B. unmittelbar durch ein Vermessen des Werkzeugs in den verschiedenen Anstellwinkeln und das Feststellen von Abweichungen der Ist-Positionen des Werkzeugs von Soll-Positionen des Werkzeugs bei den verschiedenen Anstellwinkeln erfolgen. Dies kann z.B. händisch oder mittels entsprechender Messtaster erfolgen. Um auch weitere durch den Zerspanungsprozess bedingte Toleranzen zu kompensieren, kann die Messung der Korrekturdaten aber z.B. auch mittelbar durch eine Vermessung des bearbeiteten Werkstücks erfolgen. Dabei sollte das Vermessen auf zuvor definierten Stellen erfolgen, damit der Zusammenhang zwischen der festgestellten Abweichung und dem Anstellwinkel eindeutig hergestellt werden kann. Durch das Messen der Korrekturdaten, die toleranzbedingte Positionsabweichungen des Schneidkantenabschnitts repräsentieren, für eine Mehrzahl von verschiedenen Anstellwinkeln, kann auch bei Drehbearbeitungen, bei denen eine Veränderung des Anstellwinkels möglich ist, ohne das Werkzeug zu wechseln, eine zuverlässige Korrektur von toleranzbedingten Positionsabweichungen erfolgen, sodass besonders maßhaltige Werkstücke erreicht werden. Es ist dabei z.B. möglich, für eine große Vielzahl von verschiedenen Anstellwinkeln jeweils Korrekturdaten zu messen und diese dann jeweils bei einer Bearbeitung unter diesem Anstellwinkel später zu verwenden. Andererseits ist es aber z.B. auch möglich, nur für eine begrenzte Anzahl von Anstellwinkeln Korrekturdaten zu messen und ausgehend von diesen dann für weitere Anstellwinkel rechnerisch entsprechende Korrekturdaten zu bestimmen. Das rechnerische Bestimmen der Korrekturdaten für weitere Anstellwinkel kann dann z.B. durch Interpolation oder Extrapolation ausgehend von den gemessenen Korrekturdaten erfolgen oder z.B. mittels einer anderen hinterlegten mathematischen Funktion. Bevorzugt sollten die Anstellwinkel, für die die Korrekturdaten gemessen werden, zumindest einen relativ großen Bereich für den Anstellwinkel aus dem Winkelbereich abdecken, der auch bei der Drehbearbeitung zur Anwendung kommt, um eine besonders zuverlässige Korrektur zu ermöglichen. Bevorzugt sollte auch die Anzahl der Anstellwinkel, für die Korrekturdaten individuell gemessen werden, nicht zu gering sein, um eine zuverlässige Korrektur von toleranzbedingten Positionsabweichungen auch für einen großen Bereich verschiedener Anstellwinkel zu ermöglichen. Die Korrekturdaten können dabei insbesondere eine Positionsabweichung des Schneidkantenabschnitts in einer radialen Richtung bezüglich der Rotationsachse des Werkstücks, bevorzugt zumindest für Anstellwinkel größer oder gleich 90° Positionsabweichungen in zumindest zwei zueinander orthogonalen Richtungen für jeden der verschiedenen Anstellwinkel beinhalten, besonders bevorzugt für zumindest drei zueinander orthogonale Richtungen. Die Korrekturdaten können ferner z.B. auch einen Korrekturwert für eine Abweichung der Krümmung des abgerundeten Schneideckenbereichs von einem Sollradius, etc. beinhalten. Bevorzugt kann der nutzbare Schneidkantenabschnitt einen abgerundeten Schneideckenbereich und beidseitig an diesen Schneideckenbereich angrenzende gerade erste und zweite Schneidkantenbereiche aufweisen.

Gemäß einer Weiterbildung werden die Korrekturdaten für zumindest drei verschiedene Anstellwinkel gemessen. In diesem Fall kann zuverlässig ein sinnvoller Bereich von Anstellwinkeln abgedeckt werden. Eine Messung der Korrekturdaten für mehr als drei Anstellwinkel, bevorzugt für zumindest fünf verschiedene Anstellwinkel, führt zu noch besseren Ergebnissen.

Gemäß einer Weiterbildung werden die Korrekturdaten für verschiedene Anstellwinkel gemessen, die einen Anstellwinkelbereich von zumindest 90° abdecken. In diesem Fall kann besonders zuverlässig eine Korrektur für Anstellwinkel erfolgen, die den ganzen Bereich möglicher Anstellwinkel abdecken. Bevorzugt wird ein Anstellwinkelbereich von zumindest 120°, mehr bevorzugt von zumindest 150° abgedeckt. Die Messung der Korrekturdaten kann z.B. für eine Vielzahl von Anstellwinkeln erfolgen, die im Wesentlichen gleichmäßig über den Anstellwinkelbereich verteilt sind.

Gemäß einer Weiterbildung weisen die Korrekturdaten zumindest für jeden der Mehrzahl von verschiedenen Anstellwinkeln, der größer oder gleich 90° ist, zumindest Korrekturdaten für zwei zueinander orthogonale Richtungen auf, die Abweichung von Soll-Positionen in diesen Richtungen bestimmen, bevorzugt zumindest Korrekturdaten für drei zueinander orthogonale Richtungen. In diesem Fall kann für verschiedene Anstellwinkel jeweils eine besonders zuverlässige Korrektur erfolgen. Neben diesen Korrekturdaten können auch noch weitere Korrekturwerte ermittelt werden, insbesondere z.B. ein Korrekturwert für eine Abweichung des Schneideckenbereichs von einem Soll-Eckenradius.

Gemäß einer Weiterbildung repräsentieren die Korrekturdaten für zwei zueinander orthogonale Richtungen Positionsabweichungen von Tangenten in zueinander orthogonalen Richtungen an den abgerundeten Schneideckenbereich des Schneidkantenabschnitts gegenüber Soll-Positionen. Die Verwendung von solchen Korrekturdaten ermöglicht eine besonders einfache Korrektur entsprechend zu herkömmlichen Programmen für CNC-gestützte Drehbearbeitung, jedoch für verschiedene Anstellwinkel. Mit diesen Korrekturdaten kann insbesondere für ein Längsdrehen mit einem Vorschub parallel zur Längsachse des Werkstücks und für eine Drehbearbeitung mit einem radialen Vorschub bezüglich der Längsachse des Werkstücks eine besonders zuverlässige Korrektur erfolgen. Solche Positionsabweichungen haben typischerweise eine Größenordnung < 1 mm.

Gemäß einer Weiterbildung weisen die Korrekturdaten für jeden der Mehrzahl von verschiedenen Anstellwinkeln zumindest einen Korrekturwert für einen Eckenradius auf, der eine Abweichung von einem Soll-Eckenradius repräsentiert. Der Korrekturwert kann dabei z.B. der Unterschied zwischen dem Soll-Eckenradius und einem Ist-Eckenradius sein, der dem tatsächlichen Eckenradius entspricht oder diesem zumindest näherkommt. In diesem Fall kann eine besonders einfache Korrektur in Abhängigkeit vom Anstellwinkel auch für Drehbearbeitungsschritte bereitgestellt werden, bei denen der Vorschub sowohl eine axiale Richtungskomponente entlang der Rotationsachse des Werkstücks aufweist als auch eine radiale Richtungskomponente bezüglich der Rotationsachse des Werkstücks, d.h. bei der Bearbeitung von schrägen oder in Längsrichtung gekrümmten Oberflächen. Dabei können dann insbesondere mit den entsprechenden Korrekturdaten in Abhängigkeit vom Anstellwinkel für jeden der bei der Bearbeitung zum Einsatz kommenden Anstellwinkel die bekannten Algorithmen und Verfahren zur Eckenradiuskorrektur zum Einsatz kommen.

Gemäß einer Weiterbildung werden basierend auf den gemessenen Korrekturdaten für die Mehrzahl von verschiedenen Anstellwinkeln Korrekturdaten für weitere Anstellwinkel berechnet, insbesondere für Anstellwinkel, die zwischen den Anstellwinkeln liegen, für die Korrekturdaten gemessen wurden. In dieser Weise können für den gesamten Bereich möglicher Anstellwinkel Korrekturdaten bereitgestellt werden, die eine zuverlässige Kompensation von toleranzbedingten Positionsabweichungen ermöglichen, ohne dass für alle möglichen Anstellwinkel jeweils Korrekturdaten gemessen werden müssen. Die Korrekturdaten für die weiteren Anstellwinkel können bevorzugt durch Interpolation, Extrapolation und/oder mittels einer hinterlegten Korrekturfunktion berechnet werden.

Gemäß einer Weiterbildung hat der Schneideinsatz eine Mehrzahl von zur Drehbearbeitung nutzbaren Schneidkantenabschnitten und Korrekturdaten werden für mehrere Schneidkantenabschnitte gemessen. In diesem Fall kann auch bei Schneideinsätzen, die eine Mehrzahl von zur Drehbearbeitung nutzbaren Schneidkantenabschnitten haben, zuverlässig eine Korrektur von toleranzbedingten Positionsabweichungen erfolgen. Dabei können die Korrekturdaten für jeden der Schneidkantenabschnitte im Wesentlichen in derselben Weise ermittelt werden.

Gemäß einer Weiterbildung erfolgt das Messen der Korrekturdaten durch Vermessen des eingebauten Werkzeugs mit daran angeordnetem Schneideinsatz. Das Vermessen des Werkzeugs mit daran angeordnetem Schneideinsatz kann dabei z.B. außerhalb der Bearbeitungsmaschine, z.B. an einem Werkzeugvoreinstellgerät, erfolgen. Es ist z.B. alternativ möglich, das Vermessen des Werkzeugs auch im montierten Zustand in der Bearbeitungsmaschine vorzunehmen, z.B. unter Verwendung eines entsprechenden dort vorgesehenen Messtasters.

Gemäß einer anderen Weiterbildung erfolgt das Messen der Korrekturdaten durch Vermessen eines mit dem Werkzeug gefertigten Bauteils. Dabei können sowohl Maßabweichungen als auch Formabweichungen des Bauteils berücksichtigt werden. Durch das Vermessen des mit dem Werkzeug gefertigten Bauteils in Verbindung mit der Kenntnis der bei der Fertigung verwendeten Anstellwinkel können die Korrekturdaten für eine Mehrzahl von verschiedenen Anstellwinkeln zuverlässig bestimmt werden. Besonders zuverlässig ist dies ermöglicht, wenn dazu ein Probebauteil zum Einsatz kommt, bei dem eine vorgegebene Bearbeitung unter vorgegebenen Anstellwinkeln erfolgt. Durch das Vermessen des mit dem Werkzeug gefertigten Bauteils können für die verschiedenen Anstellwinkel auch solche toleranzbedingten Positionsabweichungen kompensiert werden, die nicht nur durch das Werkzeug selbst verursacht sind, wie insbesondere Achsfehler der Bearbeitungsmaschine, elastische Auslenkungen zwischen Bearbeitungsmaschine, Werkzeug und Werkstück, etc.

Gemäß einer Weiterbildung ist der Schneideinsatz stirnseitig derart quer zu einer Längsachse des Werkzeughalters angeordnet, dass eine Flächennormale einer Spanfläche des Schneideinsatzes eine Hauptrichtungskomponente parallel zu der Längsachse des Werkzeughalters aufweist. In diesem Fall kann in besonders einfacher Weise durch eine Drehung um die Längsachse des Werkzeughalters oder eine dazu parallele Achse eine Veränderung des Anstellwinkels erfolgen.

Die Aufgabe wird auch durch ein Computerprogramm, das Anweisungen enthält zum Ansteuern einer Drehbearbeitung in einer Bearbeitungsmaschine, gemäß Anspruch 13 gelöst. Vorteilhafte Weiterbildungen sind in den abhängigen Ansprüchen angegeben.

Das Computerprogramm enthält Anweisungen zum Ansteuern einer Drehbearbeitung in einer Bearbeitungsmaschine mit einem Werkzeug, das einen in einer maschinenseitigen Aufnahme gehaltenen Werkzeughalter mit einem daran befestigten auswechselbaren Schneideinsatz aufweist, der zumindest einen zur Drehbearbeitung eines um eine Rotationsachse rotierenden Werkstücks nutzbaren Schneidkantenabschnitt mit zumindest einem abgerundeten Schneideckenbereich und zumindest einem an diesen Schneideckenbereich angrenzenden geraden ersten Schneidkantenbereich hat, derart, dass ein Anstellwinkel, den der erste Schneidkantenbereich mit der Rotationsachse einschließt, durch eine Drehung des Werkzeughalters um seine Längsachse oder eine dazu parallele Achse variiert wird. Das Computerprogramm ist derart ausgebildet, dass Korrekturdaten zur Kompensation von toleranzbedingten Positionsabweichungen des Schneidkantenabschnitts für eine Mehrzahl von verschiedenen Anstellwinkeln eingebbar sind, um eine automatisierte Korrektur der Ansteuerung des Werkzeugs bei der Drehbearbeitung in Abhängigkeit vom Anstellwinkel zu ermöglichen.

Das Computerprogramm stellt somit Korrekturdaten zur Kompensation von toleranzbedingten Positionsabweichungen als Funktion des Anstellwinkels bereit. Da die Korrekturdaten zur Kompensation von toleranzbedingten Positionsabweichungen des Schneidkantenabschnitts für eine Mehrzahl von verschiedenen Anstellwinkeln eingebbar sind, kann auch bei Drehbearbeitungen, bei denen eine Veränderung des Anstellwinkels möglich ist, ohne das Werkzeug zu wechseln, eine zuverlässige Korrektur von toleranzbedingten Positionsabweichungen erfolgen, sodass besonders maßhaltige Werkstücke erreicht werden. Es ist dabei z.B. möglich, dass für eine große Vielzahl von verschiedenen Anstellwinkeln jeweils Korrekturdaten eingebbar sind, um diese dann jeweils bei einer Bearbeitung unter diesem Anstellwinkel später zu verwenden. Andererseits ist es aber z.B. auch möglich, nur für eine begrenzte Anzahl von Anstellwinkeln ein Eingeben von Korrekturdaten vorzusehen und ausgehend von diesen dann für weitere Anstellwinkel rechnerisch entsprechende Korrekturdaten zu bestimmen. Das rechnerische Bestimmen der Korrekturdaten für weitere Anstellwinkel kann dann z.B. durch Interpolation oder Extrapolation ausgehend von den eingegebenen Korrekturdaten erfolgen oder z.B. mittels einer anderen hinterlegten mathematischen Funktion. Bevorzugt sollten die Anstellwinkel, für die die Korrekturdaten eingebbar sind, zumindest einen relativ großen Bereich für den Anstellwinkel aus dem Winkelbereich abdecken, der auch bei der Drehbearbeitung zur Anwendung kommt, um eine besonders zuverlässige Korrektur zu ermöglichen. Bevorzugt sollte auch die Anzahl der Anstellwinkel, für die Korrekturdaten individuell eingebbar sind, nicht zu gering sein, um eine zuverlässige Korrektur von toleranzbedingten Positionsabweichungen auch für einen großen Bereich verschiedener Anstellwinkel zu ermöglichen. Die eingebbaren Korrekturdaten können dabei insbesondere zumindest für Anstellwinkel größer oder gleich 90° Positionsabweichungen des Schneidkantenabschnitts in zumindest zwei zueinander orthogonalen Richtungen für jeden der verschiedenen Anstellwinkel beinhalten, besonders bevorzugt für zumindest drei zueinander orthogonale Richtungen. Die eingebbaren Korrekturdaten können ferner z.B. auch einen Korrekturwert für eine Abweichung der Krümmung des abgerundeten Schneideckenbereichs von einem Sollradius, etc. beinhalten. Das Computerprogramm kann z.B. so ausgebildet sein, dass es direkt in der Maschinensteuerung der Bearbeitungsmaschine ausgeführt wird. Es ist jedoch z.B. auch möglich, das Computerprogramm so auszubilden, dass es auf einem externen Rechner ausgeführt wird, der mit der Maschinensteuerung verbunden ist bzw. wird.

Gemäß einer Weiterbildung sind die Korrekturdaten für zumindest drei verschiedene Anstellwinkel eingebbar. In diesem Fall kann zuverlässig ein sinnvoller Bereich von Anstellwinkeln abgedeckt werden. Wenn die Korrekturdaten für zumindest fünf verschiedene Anstellwinkel eingebbar sind, können noch bessere Ergebnisse erzielt werden.

Gemäß einer Weiterbildung sind die Korrekturdaten für verschiedene Anstellwinkel eingebbar, die einen Anstellwinkelbereich von zumindest 90° abdecken. In diesem Fall wird ein großer Bereich der zu nutzenden Anstellwinkel abgedeckt. Bevorzugt beträgt der Anstellwinkelbereich, für den Korrekturdaten eingebbar sind, zumindest 120°, mehr bevorzugt zumindest 150°.

Gemäß einer Weiterbildung weisen die eingebbaren Korrekturdaten zumindest für jeden der Mehrzahl von verschiedenen Anstellwinkeln, der größer oder gleich 90° beträgt, zumindest Korrekturdaten für zwei zueinander orthogonale Richtungen auf, die Abweichung von Soll-Positionen in diesen Richtungen bestimmen. In diesem Fall kann für verschiedene Anstellwinkel jeweils eine besonders zuverlässige Korrektur erfolgen. Bevorzugt weisen die eingebbaren Korrekturdaten für jeden der Mehrzahl von verschiedenen Anstellwinkeln zumindest Korrekturdaten für drei zueinander orthogonale Richtungen auf. Neben diesen Korrekturdaten können auch noch weitere Korrekturwerte ermittelt werden, insbesondere z.B. ein Korrekturwert für eine Abweichung des Schneideckenbereichs von einem Soll-Eckenradius.

Gemäß einer Weiterbildung weisen die Korrekturdaten für jeden der Mehrzahl von verschiedenen Anstellwinkeln zumindest einen Korrekturwert für einen Eckenradius auf, der eine Abweichung von einem Soll-Eckenradius repräsentiert. In diesem Fall kann eine besonders einfache Korrektur in Abhängigkeit vom Anstellwinkel auch für Drehbearbeitungsschritte bereitgestellt werden, bei denen der Vorschub sowohl eine axiale Richtungskomponente entlang der Rotationsachse des Werkstücks aufweist als auch eine radiale Richtungskomponente bezüglich der Rotationsachse des Werkstücks, d.h. bei der Bearbeitung von schrägen oder in Längsrichtung gekrümmten Oberflächen. Dabei können dann insbesondere mit den entsprechenden Korrekturdaten in Abhängigkeit vom Anstellwinkel für jeden der bei der Bearbeitung zum Einsatz kommenden Anstellwinkel die bekannten Algorithmen und Verfahren zur Eckenradiuskorrektur zum Einsatz kommen.

Gemäß einer Weiterbildung berechnet das Computerprogramm basierend auf eingegebenen Korrekturdaten für die Mehrzahl von verschiedenen Anstellwinkeln Korrekturdaten für weitere Anstellwinkel, insbesondere für Anstellwinkel, die zwischen den Anstellwinkeln liegen, für die Korrekturdaten eingegeben wurden. In dieser Weise können für den gesamten Bereich möglicher Anstellwinkel Korrekturdaten als Funktion des Anstellwinkels bereitgestellt werden, die eine zuverlässige Kompensation von toleranzbedingten Positionsabweichungen ermöglichen, ohne dass für alle möglichen Anstellwinkel jeweils Korrekturdaten gemessen werden müssen. Die Korrekturdaten für die weiteren Anstellwinkel können bevorzugt durch Interpolation, Extrapolation und/oder mittels einer hinterlegten Korrekturfunktion berechnet werden.

Weitere Vorteile und Zweckmäßigkeiten der Erfindung ergeben sich anhand der nachfolgenden Beschreibung eines Ausführungsbeispiels unter Bezugnahme auf die beigefügten Figuren.

Von den Figuren zeigen:
- Fig. 1:: eine schematische perspektivische Darstellung eines Verfahrens zur Drehbearbeitung;
- Fig. 2:: eine schematische Darstellung des Verfahrens zur Drehbearbeitung in einer Blickrichtung entlang der Rotationsachse des rotierenden Werkstücks;
- Fig. 3:: eine schematische Darstellung des Verfahrens zur Drehbearbeitung in einer Blickrichtung senkrecht zur Rotationsachse des rotierenden Werkstücks und senkrecht zu einer Längsachse des Werkzeughalters;
- Fig. 4:: eine schematische Darstellung des Verfahrens zur Drehbearbeitung in einer Blickrichtung senkrecht zur Rotationsachse des rotierenden Werkstücks und entlang der Längsachse des Werkzeughalters, wobei die Drehbearbeitung unter einem ersten Anstellwinkel erfolgt;
- Fig. 5:: eine Fig. 4 entsprechende schematische Darstellung, wobei die Drehbearbeitung unter einem kleineren zweiten Anstellwinkel erfolgt;
- Fig. 6a - 6d:: den Fig. 4 und Fig. 5 entsprechende vereinfachte schematische Darstellungen von Drehbearbeitungen unter verschiedenen Anstellwinkeln mit einem Schneideinsatz, der eine etwas abgewandelte Grundform aufweist;
- Fig. 7:: eine schematische Darstellung der Bestimmung von Korrekturdaten für zwei zueinander orthogonale Richtungen bei einem vorgegebenen Anstellwinkel;
- Fig. 8:: eine schematische Darstellung einer Möglichkeit der Bestimmung eines Korrekturwerts für einen Eckenradius eines abgerundeten Schneideckenbereichs; und
- Fig. 9:: eine weitere schematische Darstellung der Abweichung der Form des abgerundeten Schneideckenbereichs von einem Soll-Eckenradius und zur Bestimmung eines Korrekturwerts für den Eckenradius des abgerundeten Schneideckenbereichs.

### AUSFÜHRUNGSFORM

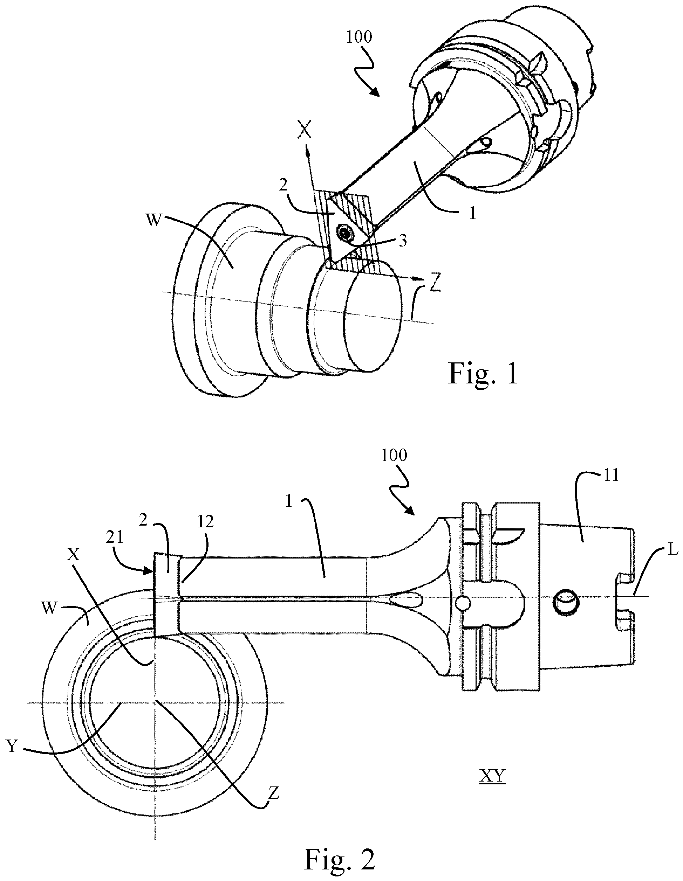

Eine Ausführungsform wird nachfolgend unter Bezugnahme auf die Fig. 1 bis Fig. 9 beschrieben.

Das anhand der Fig. 1 bis Fig. 5 schematisch dargestellte Verfahren zur Drehbearbeitung erfolgt in einer Bearbeitungsmaschine, die z.B. ein CNC-gesteuertes Dreh-Fräs-Zentrum mit einer Mehrzahl von ansteuerbaren Achsen sein kann. Derartige Bearbeitungsmaschinen sind bekannt und zur Vereinfachung der Beschreibung sind keine Details der Bearbeitungsmaschine dargestellt.

Das bei dem Verfahren zum Einsatz kommende Werkzeug 100 hat einen Werkzeughalter 1, der einen daran drehfest befestigten auswechselbaren Schneideinsatz 2 trägt. Der Werkzeughalter 1 erstreckt sich entlang einer Längsachse L und hat ein erstes Ende 11, das dazu ausgebildet ist, in einer (nicht dargestellten) maschinenseitigen Aufnahme der Bearbeitungsmaschine gehalten zu werden. Ein Sitz für den auswechselbaren Schneideinsatz 2 ist an einem dem ersten Ende 11 gegenüberliegenden zweiten Ende 12 des Werkzeughalters 1 derart ausgebildet, dass sich der an dem Sitz befestigte Schneideinsatz 2 quer zu der Längsachse L erstreckt und eine als Spanfläche dienende Oberseite 21 des Schneideinsatzes 2 von dem zweiten Ende 12 des Werkzeughalters 1 abgewandt ausgerichtet ist. Die Oberseite 21 kann dabei z.B. mit einer Spanleitstufenstruktur zum Formen, Ableiten und Brechen von bei der Drehbearbeitung entstehenden Spänen versehen sein, die in den Figuren zur Vereinfachung nicht dargestellt ist.

Bei dem konkret dargestellten Beispiel ist der auswechselbare Schneideinsatz 2 mittels einer Befestigungsschraube 3, die ein Durchgangsloch in dem Schneideinsatz 2 durchgreift, stirnseitig an dem zweiten Ende 12 des Werkzeughalters 1 befestigt. Die drehfeste Befestigung des Schneideinsatzes 2 an dem Werkzeughalter 1 kann z.B. durch ein formschlüssiges Zusammenwirken einer Unterseite des Schneideinsatzes 2 mit dem zweiten Ende 12 des Werkzeughalters 1 realisiert sein.

Der Schneideinsatz 2 ist aus einem harten und verschleißbeständigen Material gebildet und kann insbesondere aus Hartmetall (cemented carbide), Cermet oder einer Schneidkeramik gebildet sein. Der Werkzeughalter 1 ist bei der Ausführungsform aus einem zäheren Material, wie z.B. einem Werkzeugstahl gefertigt. Es ist aber z.B. auch möglich, den Werkzeugkörper 1 aus einem Hartmetall (cemented carbide), Cermet oder anderen Materialien zu bilden.

Wie in den Fig. 1 bis Fig. 3 zu sehen ist, ist der Werkzeughalter 1 im Bereich seines zweiten Endes 12 als Werkzeugschaft ausgebildet, der in einem Schnitt senkrecht zur Längsachse L eine Querschnittsform hat, die im Wesentlichen mit einer Grundform des daran befestigten Schneideinsatzes 2 übereinstimmt.

An einem Übergang von der Oberseite 21 zu einer umlaufenden Seitenfläche weist der Schneideinsatz 2 zumindest einen zur Drehbearbeitung eines um eine Rotationsachse Z rotierenden Werkstücks W nutzbaren Schneidkantenabschnitt 22 auf, der zumindest einen abgerundeten Schneideckenbereich 22a und zumindest einen an diesen Schneideckenbereich 22a angrenzenden geraden ersten Schneidkantenbereich 22b hat. Der erste Schneidkantenbereich 22b schließt dabei insbesondere bevorzugt im Wesentlichen tangential an ein Ende des abgerundeten Schneideckenbereichs 22a an. Bei der Ausführungsform hat der nutzbare Schneidkantenabschnitt 22 außerdem einen geraden zweiten Schneidkantenbereich 22c, der an das andere Ende des abgerundeten Schneideckenbereichs 22a angrenzt. Letzterer schließt ebenfalls bevorzugt im Wesentlichen tangential an das andere Ende des Schneideckenbereichs 22a an. Der nutzbare Schneidkantenabschnitt 22 erstreckt sich dabei quer zu der Längsachse L des Werkzeughalters 1. Besonders bevorzugt kann sich der nutzbare Schneidkantenabschnitt 22 in einer Ebene erstrecken, die senkrecht zur Längsachse L des Werkzeughalters 1 ausgerichtet ist. Der nutzbare Schneidkantenabschnitt 22 steht bezüglich der Längsachse L seitlich von dem zweiten Ende 12 des Werkzeughalters 1 hervor.

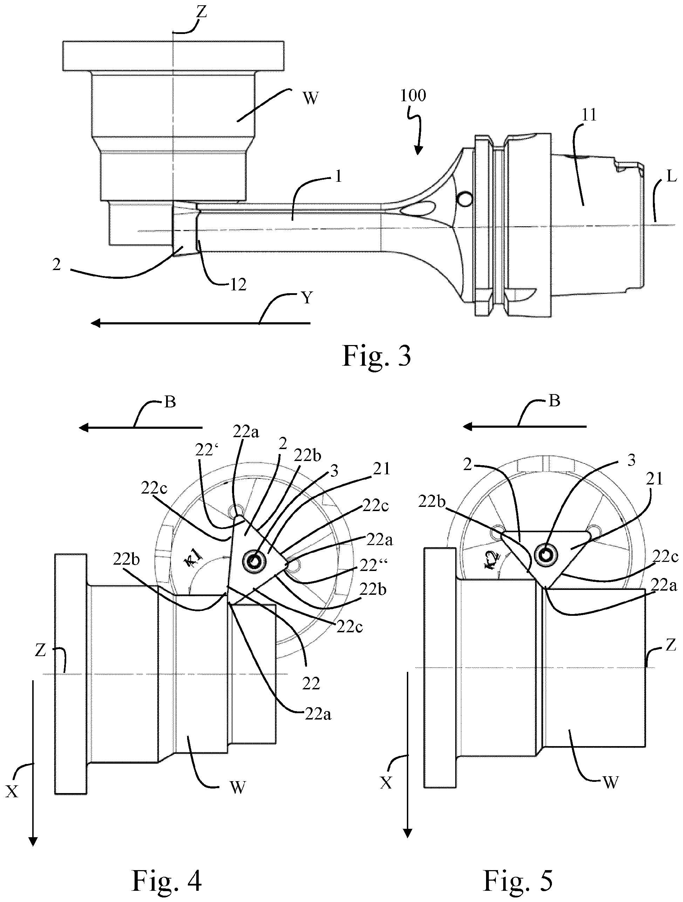

Bei dem konkret in den Fig. 1 bis Fig. 5 dargestellten Ausführungsbeispiel hat der Schneideinsatz 2 eine Mehrzahl von nutzbaren Schneidkantenabschnitten 22, 22', 22", die jeweils zumindest einen abgerundeten Schneideckenbereich 22a und zumindest einen an diesen angrenzenden geraden ersten Schneidkantenbereich 22b haben, wie in Fig. 4 schematisch eingezeichnet ist. Bei dem Ausführungsbeispiel gehen diese nutzbaren Schneidkantenabschnitte 22, 22', 22" jeweils direkt ineinander über, sodass die Oberseite 21 des Schneideinsatzes 2 von einer umlaufenden Schneidkante umgeben ist, die allseitig seitlich über das zweite Ende 12 des Werkzeughalters 1 hervorsteht. Obwohl eine solche Ausbildung bevorzugt ist, ist es alternativ auch möglich, dass der Übergang von der Oberseite 21 zu der umlaufenden Seitenfläche des Schneideinsatzes 2 nur bereichsweise als Schneidkante ausgebildet ist. Bevorzugt erstrecken sich die nutzbaren Schneidkantenabschnitte 22, 22', 22" alle in einer gemeinsamen Ebene quer zur Längsachse L des Werkzeughalters 1, wobei sich diese Ebene besonders bevorzugt senkrecht zur Längsachse L des Werkzeughalters 1 erstreckt. Obwohl der Schneideinsatz 2 bei dem dargestellten Beispiel insgesamt drei abgerundete Schneideckenbereich 22a hat, ist es z.B. auch möglich, dass der Schneideinsatz 2 weniger als drei oder mehr als drei abgerundete Schneideckenbereiche 22a aufweist. Verschiedene abgerundete Schneideckenbereiche 22a können sich dabei z.B. insbesondere durch die Größe des eingeschlossenen Eckenwinkels, den die angrenzenden ersten und zweiten geraden Schneidkantenbereiche 22b, 22c miteinander einschließen, voneinander unterscheiden.

Im Folgenden wird jeweils auf einen nutzbaren Schneidkantenabschnitt 22 Bezug genommen und es versteht sich, dass die Ausführungen jeweils auch für etwaige vorhandene weitere nutzbare Schneidkantenabschnitte entsprechend anwendbar sind.

Wie aus den Fig. 1 bis Fig. 5 ersichtlich ist, kann bei dem Verfahren zur Drehbearbeitung ein Anstellwinkel κ, κ1, κ2, den der gerade erste Schneidkantenbereich 22b mit der Rotationsachse Z des Werkstücks W einschließt, variiert werden. Dies kann entweder geschehen, während der Schneideinsatz 2 im Eingriff mit dem Werkstück ist, oder in einem Zwischenzeitraum, wenn der Schneideinsatz 2 nicht im Eingriff mit dem Werkstück ist. Eine Vorschubrichtung B ist in den Fig. 4 und Fig. 5 schematisch eingezeichnet. Das Verändern des Anstellwinkels κ, κ1, κ2 erfolgt dabei dadurch, dass der Werkzeughalter 1 um einen bestimmten Winkel um seine Längsachse L gedreht wird oder alternativ dazu um eine zu der Längsachse L des Werkzeughalters 1 parallele Achse. Wie aus einem Vergleich der Fig. 4 und Fig. 5 ersichtlich ist, kann durch eine solche Drehung um einen vorgegebenen Winkel um die Längsachse L des Werkzeughalters 1 oder eine dazu parallele Achse auch der nutzbare Schneidkantenabschnitt 22, 22', 22" gewechselt werden, wenn mehrere nutzbare Schneidkantenabschnitte vorhanden sind. Die Drehung des Werkzeughalters 1 um die Längsachse L bzw. eine dazu parallele Achse kann insbesondere durch eine entsprechende Drehung der maschinenseitigen Aufnahme der Bearbeitungsmaschine erfolgen, die dazu mit dieser Funktionalität ausgestattet sein muss, was z.B. in der Bearbeitungsmaschine selbst bereits vorgesehen sein kann oder z.B. durch einen entsprechenden Adapter realisiert sein kann. Synchronisiert mit der Drehung des Werkzeughalters 1 um seine Längsachse L erfolgt bevorzugt zumindest eine Bewegung in einer radialen Richtung bezüglich der Rotationsachse R des Werkstücks W, um eine ungewollte Veränderung der Schnitttiefe zu vermeiden.

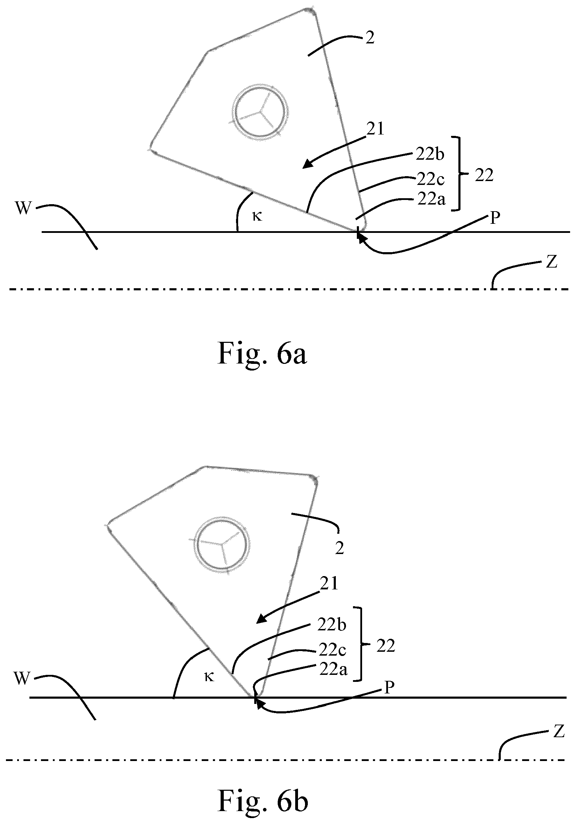

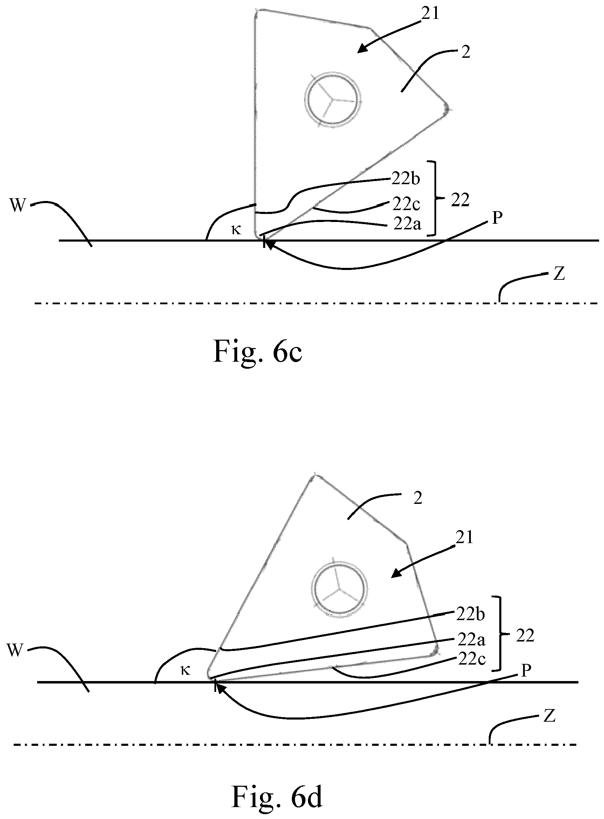

In den Fig. 6a bis Fig. 6d sind schematisch nochmals verschiedene Werte des Anstellwinkels κ für einen Schneideinsatz 2 mit einer gegenüber dem zuvor gezeigten Schneideinsatz 2 leicht veränderten Grundform dargestellt, wobei zur Bezeichnung entsprechender Bereiche dieselben Bezugszeichen verwendet werden. In Fig. 6a ist eine Ausrichtung des Schneideinsatzes 2 gezeigt, bei der ein kleiner Anstellwinkel κ realisiert ist, der deutlich kleiner als 45° ist, wohingegen in Fig. 6b der Anstellwinkel κ ca. 45° beträgt. Fig. 6c stellt eine Situation dar, bei der Anstellwinkel κ etwas größer als 90° ist, und Fig. 6d einen noch deutlich größeren Anstellwinkel von ca. 120°. Es ist dabei unmittelbar ersichtlich, dass der größtmögliche realisierbare Anstellwinkel unter anderem von dem konkreten Eckenwinkel des genutzten Schneideckenbereichs 22a abhängig ist. Außerdem ist der realisierbare Anstellwinkel κ aber unter anderem auch von der Vorschubrichtung bei der Drehbearbeitung, also ob der Vorschub, mit dem das Werkzeug 100 relativ zum Werkstück W bewegt wird, nur eine axiale Richtungskomponente oder auch eine radiale Richtungskomponente bezüglich der Rotationsachse Z des Werkstücks W hat oder sogar nur eine radiale Richtungskomponente, und der jeweiligen Kontur des zu erzeugenden Werkstücks abhängig.

Bereits aus der schematischen Darstellung in den Fig. 6a bis Fig. 6d ist ferner ersichtlich, dass der Werkstückkontaktpunkt P, also der Punkt des Schneidkantenabschnitts 22, der letztlich das Maß der bearbeiteten Oberfläche des Werkstücks W bestimmt, seine Position an dem Schneidkantenabschnitt 22 in Abhängigkeit von dem gewählten Anstellwinkel κ ändert.

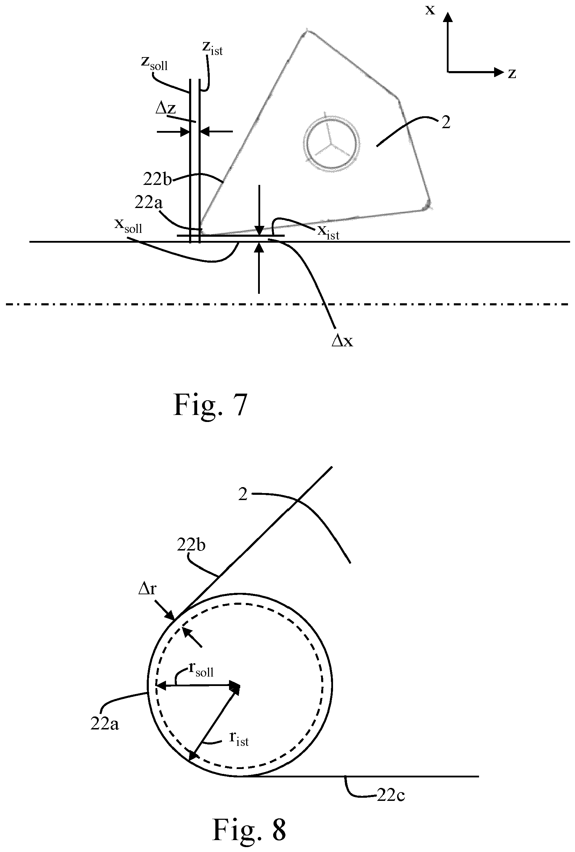

Mit Bezug auf Fig. 7 wird nun beispielhaft für eine Drehbearbeitung mit dem in Fig. 6d dargestellten Anstellwinkel κ die Bedeutung von toleranzbedingten Positionsabweichungen des Schneidkantenabschnitts 22 erläutert, wobei dies in Fig. 7 schematisch und stark vergrößert dargestellt ist.

Aufgrund diverser Toleranzen, die eingangs ausführlicher erläutert wurden, stimmt die reale Position des Schneidkantenabschnitts 22 bei der Drehbearbeitung gegebenenfalls nicht mit der Sollposition überein. Insbesondere stimmt eine Position xᵢₛₜ des Schneideckenbereichs 22a in einer radialen Richtung x bezüglich der Rotationsachse Z gegebenenfalls nicht mit der Soll-Position xₛₒₗₗ in dieser Richtung überein, sondern weicht um einen Korrekturwert Δx von dieser ab, wie in Fig. 7 schematisch dargestellt ist. Dies hat insbesondere dann eine Auswirkung auf das erzeugte Maß des Werkstücks W, wenn eine Drehbearbeitung mit einer Richtungskomponente des Vorschubs parallel zu der Längsachse Z des Werkstücks W erfolgt. Der Korrekturwert Δx kann insbesondere durch Messung des Abstands einer Tangente parallel zu der Rotationsachse Z an den Schneideckenbereich 22 von der Soll-Position xₛₒₗₗ bestimmt werden, wie in Fig. 7 schematisch dargestellt ist. Ferner stimmt eine Position zᵢₛₜ des Schneideckenbereichs 22a in einer dazu orthogonalen axialen Richtung z bezüglich der Rotationsachse Z gegebenenfalls nicht mit der Soll-Position zₛₒₗₗ in dieser Richtung überein, sondern weicht um einen Korrekturwert Δz von dieser ab, wie ebenfalls in Fig. 7 schematisch dargestellt ist. Dies hat insbesondere dann eine Auswirkung auf das erzeugte Maß des Werkstücks W, wenn eine Drehbearbeitung mit einer Richtungskomponente des Vorschubs senkrecht zu der Längsachse Z des Werkstücks W erfolgt, wie es z.B. bei der Bearbeitung von Schultern oder schrägen bzw. gekrümmten Flanken der Fall ist. Der Korrekturwert Δz kann insbesondere durch Messung des Abstands einer Tangente senkrecht zu der Rotationsachse Z in radialer Richtung an den Schneideckenbereich 22 von der Soll-Position zₛₒₗₗ bestimmt werden, wie in Fig. 7 schematisch dargestellt ist. Auch in der dritten zu den beiden zuvor beschriebenen Richtungen x, z orthogonalen dritten Richtung y kann gegebenenfalls die reale Position yᵢₛₜ des Schneideckenbereichs 22a von der Sollposition yₛₒₗₗ um einen Korrekturwert Δy abweichen, was einer Abweichung der "Spitzenhöhe" bei der Drehbearbeitung entspricht. Letzteres ist in den Figuren nicht gesondert dargestellt.

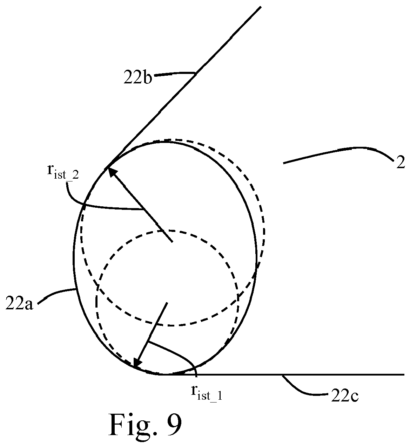

Auf die Maßhaltigkeit des Werkstücks hat es ferner auch einen Einfluss, ob der abgerundete Schneideckenbereich 22a exakt entlang eines vorgegebenen Soll-Eckenradius rₛₒₗₗ verläuft oder von diesem abweicht, indem er z.B. einen anderen tatsächlichen Eckenradius rᵢₛₜ hat. Dies ist beispielhaft in Fig. 8 dargestellt. Es kann z.B. der tatsächliche Eckenradius rᵢₛₜ gemessen werden und eine Differenz zwischen diesem und dem Soll-Eckenradius rₛₒₗₗ kann als Korrekturwert Δr für den Eckenradius verwendet werden. Wie schematisch in Fig. 9 dargestellt ist, kann der abgerundete Schneideckenbereich 22a z.B. auch von einem teilkreisförmigen Verlauf abweichen, sich z.B. annähernd teilellipsenförmig erstrecken, sodass an verschiedenen Stellen des abgerundeten Schneideckenbereichs 22a verschiedene lokale Eckenradii r_{ist_1}, r_{ist_2} vorliegen. In diesem Fall kann z.B. als Korrekturwert Δr für den Eckenradius die Abweichung des jeweiligen lokalen Eckenradius r_{ist_1}, r_{ist_2} an dem oben mit Bezug auf die Fig. 6a bis Fig. 6d beschriebenen Werkstückkontaktpunkt P von dem Soll-Eckenradius rₛₒₗₗ für die verschiedenen Anstellwinkel κ ermittelt werden. Je nach Bearbeitungsrichtung sind auch noch weitere Korrekturen für den Eckenradius möglich, um toleranzbedingte Abweichungen des Eckenradius des abgerundeten Schneideckenbereichs 22a möglichst vollständig kompensieren zu können.

Die Abweichung des abgerundeten Schneideckenbereichs 22a von einem Soll-Eckenradius rₛₒₗₗ wirkt sich insbesondere bei einer Drehbearbeitung mit einem Vorschub, der sowohl eine axiale Richtungskomponente als auch eine radiale Richtungskomponente bezüglich der Rotationsachse Z des Werkstücks W hat, auf die resultierenden Abmessungen des Werkstücks aus, da in diesem Fall die typischerweise maschinenseitig hinterlegten Radiuskorrekturfunktionen, die auf einem vorgegebenen Soll-Eckenradius rₛₒₗₗ basieren, nicht zu zufriedenstellenden Ergebnissen führen.

Damit sich die Abweichungen in den beschriebenen Raumrichtungen nicht nachteilig auf die Maßhaltigkeit des Werkstücks auswirken, muss die Drehbearbeitung entsprechend angepasst werden, damit sie diese toleranzbedingten Positionsabweichungen korrigiert.

Bei dem Verfahren gemäß der Ausführungsform werden für eine Mehrzahl von verschiedenen Anstellwinkeln κ jeweils Korrekturdaten gemessen. Z.B. werden für mehrere verschiedene Anstellwinkel κ, die kleiner als 90° sind, Korrekturdaten Δx, Δr und gegebenenfalls Δy gemessen, und für mehrere verschiedene Anstellwinkel κ, die größer oder gleich 90° sind, werden Korrekturdaten Δx, Δz und gegebenenfalls Δy und/oder Δr gemessen. Dies ist beispielhaft in der folgenden Tabelle dargestellt. Es versteht sich, dass die konkreten in der Tabelle enthaltenen Werte der Korrekturdaten nur beispielhaft sind.

**TABELLE 1**

| Anstellwinkel κ | Δx [mm] | Δy [mm] | Δz [mm] | Δr [mm] |
|---|---|---|---|---|
| 0° | -0,110 | 0,000 | 0,000 | -0,009 |
| 30° | -0,100 | 0,000 | 0,000 | -0,021 |
| 60° | 0,002 | 0,000 | 0,000 | 0,033 |
| 90° | 0,003 | 0,000 | 0,053 | 0,052 |
| 120° | 0,050 | 0,000 | 0,058 | 0,059 |
| 150° | 0,072 | 0,000 | 0,092 | 0,093 |
| 180° | 0,103 | 0,000 | 0,112 | 0,111 |

Bei dem in der Tabelle 1 dargestellten Beispiel beträgt z.B. der Korrekturwert Δy für sämtliche Anstellwinkel κ jeweils 0,000. Dies entspricht einer Situation, bei der die Spitzenhöhe des Werkzeugs 100 optimal eingestellt ist und es folglich keiner weiteren Korrektur in dieser Raumrichtung bedarf. Es ist jedoch auch möglich, dass auch eine Korrektur in dieser Richtung nötig ist. In dem Beispiel werden aber Korrekturwerte für Δx und Δr für alle gemessenen Anstellwinkel ermittelt und auch Korrekturwerte Δz für alle gemessenen Anstellwinkel κ ≥ 90°. Obwohl bei diesem Beispiel für insgesamt sieben Werte des Anstellwinkels κ jeweils Korrekturdaten gemessen werden, ist es z.B. auch möglich für weniger als sieben Werte des Anstellwinkels κ oder für mehr als sieben Werte des Anstellwinkels κ jeweils Korrekturdaten zu messen. Um eine möglichst gute Korrektur von toleranzbedingten Positionsabweichungen bei verschiedenen zum Einsatz kommenden Anstellwinkeln κ zu ermöglichen, ist es jedoch bevorzugt, für zumindest drei verschiedene Anstellwinkel κ Korrekturdaten zu messen, mehr bevorzugt für zumindest fünf verschiedene Anstellwinkel κ. Obwohl bei dem Beispiel Korrekturdaten für einen Anstellwinkelbereich gemessen werden, der 180° abdeckt, ist es z.B. auch möglich, Korrekturdaten nur für einen kleineren Anstellwinkelbereich zu messen. Um eine gute Korrektur von toleranzbedingten Positionsabweichungen bei verschiedenen zum Einsatz kommenden Anstellwinkeln κ zu ermöglichen, ist es jedoch bevorzugt, wenn Korrekturdaten für einen Anstellwinkelbereich von zumindest 90°, bevorzugt von zumindest 120° gemessen werden. Bei dem Beispiel werden Korrekturdaten Δr für den Eckenradius für den gesamten Anstellwinkelbereich, für den Messungen stattfinden, ermittelt. Alternativ dazu ist es aber auch möglich, Korrekturdaten für den Eckenradius nur für einen Teil der Anstellwinkel zu messen.

Bei dem in Tabelle 1 dargestellten Beispiel werden bespielhaft Korrekturdaten in gleichmäßigen Winkelabständen von 30° über den Anstellwinkelbereich gemessen. Alternativ dazu sind z.B. aber auch Messungen in anderen Winkelabständen oder auch z.B. in ungleichen Winkelabständen möglich. Wenn eine Drehbearbeitung unter einem Anstellwinkel κ erfolgen soll, für den keine gemessenen Korrekturdaten Δx, Δy, Δz, Δr vorliegen, wie z.B. einen Anstellwinkel von 25° bei dem konkreten Beispiel, so werden bei dem Beispiel die Korrekturdaten Δx, Δy, Δz, Δr für diesen Anstellwinkel aus den vorliegenden gemessenen Korrekturdaten Δx, Δy, Δz, Δr berechnet. Dies kann z.B. in der einfachsten Weise durch eine Interpolation zwischen den Korrekturdaten erfolgen, die zu den nächstliegenden Anstellwinkeln gemessen wurden. Sofern keine Korrekturdaten für einen größeren oder einen kleineren Anstellwinkel gemessen wurden, so kann die Berechnung z.B. auch als Extrapolation ausgehend von einer Seite erfolgen. Alternativ dazu ist es z.B. aber auch möglich, die gemessenen Korrekturdaten mit einer mathematischen Kurve zu fitten und entsprechende Korrekturdaten für den gesamten möglichen Anstellwinkelbereich basierend auf dieser mathematischen Beschreibung zu bestimmen. Diese Vorgehensweisen haben jeweils den Vorteil, dass auch für Anstellwinkel, für die zuvor keine Messung von Korrekturdaten Δx, Δy, Δz, Δr erfolgt ist, entsprechende Korrekturdaten bereitgestellt werden können, mit denen dann eine Ansteuerung des Werkzeugs 100 auch für diese Anstellwinkel derart erfolgen kann, dass toleranzbedingte Positionsabweichungen zuverlässig korrigiert werden.

Die in Tabelle 1 beispielhaft dargestellten Korrekturdaten Δx, Δy, Δz, Δr für verschiedene Anstellwinkel κ können z.B. durch Vermessen des Werkzeugs 100 vor dessen Einsatz bestimmt werden, sodass durch Toleranzen des Werkzeugs 100 bedingte Positionsabweichungen zuverlässig bei der Drehbearbeitung unter verschiedenen Anstellwinkeln κ kompensiert werden können. In dieser Weise ist eine gute Kompensation toleranzbedingter Positionsabweichungen möglich, da maschinenseitige Toleranzen oftmals schon anderweitig in der Maschine selbst korrigiert werden. Das Vermessen des Werkzeugs 100 kann dabei z.B. optisch erfolgen oder mittels eines Messtasters. Alternativ ist es z.B. aber auch möglich, die Korrekturdaten Δx, Δy, Δz, Δr für verschiedene Anstellwinkel κ mittelbar dadurch zu messen, dass ein mit dem Werkzeug 100 bearbeitetes Werkstück W ausgemessen wird und von den Maßabweichungen des Werkstücks W auf die toleranzbedingten Positionsabweichungen des Schneidkantenabschnitts 22 rückgeschlossen wird.

Bei der Ausführungsform ist ferner ein Computerprogramm bereitgestellt, das solche Anweisungen enthält, dass eine Kompensation von toleranzbedingten Positionsabweichungen auch dann zuverlässig ermöglicht ist, wenn eine Veränderung des Anstellwinkels κ bei der Drehbearbeitung erfolgt.

Das Computerprogramm hat bei der Ausführungsform zu diesem Zweck eine Eingabemaske, die z.B. manuell mit entsprechenden Eingabemitteln, wie insbesondere den üblichen Eingabemitteln Tastatur, Maus, Touchscreen, etc., für eine Mehrzahl von verschiedenen Anstellwinkeln κ mit den Korrekturdaten Δx, Δy, Δz, Δr zur Kompensation von toleranzbedingten Positionsabweichungen des Schneidkantenabschnitts 22 befüllt werden kann. Alternativ dazu ist es z.B. auch möglich, eine automatisierte Eingabe der Korrekturdaten Δx, Δy, Δz, Δr vorzusehen, bei der die Korrekturdaten Δx, Δy, Δz, Δr für den jeweiligen Anstellwinkel κ direkt von einer entsprechenden Messvorrichtung in die Eingabemaske eingegeben werden. Eine Ausgestaltung, bei der die Eingabe der Korrekturdaten Δx, Δy, Δz, Δr zumindest auch durch einen Bediener erfolgen kann, ist jedoch bevorzugt, da in diesem Fall in einfacher Weise auch in ungewöhnlichen Konstellationen zusätzliche Kompensationen vorgenommen werden können.

Das Computerprogramm enthält Anweisungen, sodass basierend auf den eingegebenen Korrekturdaten Δx, Δy, Δz, Δr für eine Mehrzahl von Anstellwinkeln κ eine automatisierte Korrektur der Ansteuerung des Werkzeugs 1 bei der Drehbearbeitung in Abhängigkeit vom Anstellwinkel κ realisiert ist. Mit anderen Worten erfolgt eine automatisierte Korrektur als Funktion des Anstellwinkels und dies auch für weitere Anstellwinkel κ, für die keine Korrekturdaten eingegeben wurden. Dies wird - wie oben bereits mit Bezug auf das Verfahren beschrieben - dadurch erreicht, dass für weitere Anstellwinkel κ entsprechende Korrekturdaten rechnerisch ermittelt werden, was z.B. durch Interpolation zwischen eingegebenen Korrekturdaten, Extrapolation ausgehend von eingegebenen Korrekturdaten oder durch sonstige hinterlegte mathematische Funktionen erfolgen kann. Die für den jeweiligen Anstellwinkel κ zutreffenden Korrekturdaten Δx, Δy, Δz, Δr werden dann dafür verwendet, die Bearbeitungsmaschine derart anzusteuern, dass die toleranzbedingten Positionsabweichungen des Schneidkantenabschnitts 22 bei der Drehbearbeitung korrigiert werden, indem die Bearbeitungsmaschine in den entsprechenden Raumrichtungen, in denen Positionsabweichungen vorliegen, die Position entsprechend korrigiert.

## Patentansprüche

1. Verfahren zur Drehbearbeitung in einer Bearbeitungsmaschine mit einem Werkzeug (100), das einen in einer maschinenseitigen Aufnahme gehaltenen Werkzeughalter (1) mit einem daran befestigten auswechselbaren Schneideinsatz (2) aufweist, der zumindest einen zur Drehbearbeitung eines um eine Rotationsachse (Z) rotierenden Werkstücks (W) nutzbaren Schneidkantenabschnitt (22; 22'; 22") mit zumindest einem abgerundeten Schneideckenbereich (22a) und zumindest einem an diesen Schneideckenbereich (22a) angrenzenden geraden ersten Schneidkantenbereich (22b) hat, derart, dass ein Anstellwinkel (κ), den der erste Schneidkantenbereich (22b) mit der Rotationsachse (Z) des Werkstücks (W) einschließt, durch eine Drehung des Werkzeughalters (1) um seine Längsachse (L) oder eine dazu parallele Achse variiert wird,
wobei Korrekturdaten(Δx, Δy, Δz, Δr), die toleranzbedingte Positionsabweichungen des Schneidkantenabschnitts (22; 22'; 22") repräsentieren, individuell für eine Mehrzahl von verschiedenen Anstellwinkeln (κ) gemessen werden und
wobei eine Ansteuerung des Werkzeugs (1) bei der Drehbearbeitung basierend auf den Korrekturdaten (Δx, Δy, Δz, Δr) in Abhängigkeit vom Anstellwinkel (κ) korrigiert wird.

2. Verfahren nach Anspruch 1, wobei die Korrekturdaten (Δx, Δy, Δz, Δr) für zumindest drei verschiedene Anstellwinkel (κ) gemessen werden, bevorzugt für zumindest fünf verschiedene Anstellwinkel (κ).

3. Verfahren nach Anspruch 1 oder 2, wobei die Korrekturdaten (Δx, Δy, Δz, Δr) für verschiedene Anstellwinkel (κ) gemessen werden, die einen Anstellwinkelbereich von zumindest 90° abdecken, bevorzugt von zumindest 120°, mehr bevorzugt von zumindest 150°.

4. Verfahren nach einem der vorangehenden Ansprüche, wobei die Korrekturdaten (Δx, Δy, Δz, Δr) zumindest für jeden der Mehrzahl von verschiedenen Anstellwinkeln (κ), der größer oder gleich 90° ist, zumindest Korrekturdaten (Δx, Δz) für zwei zueinander orthogonale Richtungen aufweisen, die Abweichung von Soll-Positionen (xₛₒₗₗ, zₛₒₗₗ) in diesen Richtungen bestimmen, bevorzugt zumindest Korrekturdaten (Δx, Δy, Δz) für drei zueinander orthogonale Richtungen.

5. Verfahren nach Anspruch 4, wobei die Korrekturdaten (Δx, Δz) für zwei zueinander orthogonale Richtungen Positionsabweichungen von Tangenten in zueinander orthogonalen Richtungen an den abgerundeten Schneideckenbereich (22a) des Schneidkantenabschnitts (22) gegenüber Soll-Positionen (xₛₒₗₗ, zₛₒₗₗ) repräsentieren.

6. Verfahren nach einem der vorangehenden Ansprüche, wobei die Korrekturdaten (Δx, Δy, Δz, Δr) für jeden der Mehrzahl von verschiedenen Anstellwinkeln (κ) zumindest einen Korrekturwert (Δr) für einen Eckenradius aufweisen, der eine Abweichung von einem Soll-Eckenradius (rₛₒₗₗ) repräsentiert.

7. Verfahren nach einem der vorangehenden Ansprüche, wobei basierend auf den gemessenen Korrekturdaten (Δx, Δy, Δz, Δr) für die Mehrzahl von verschiedenen Anstellwinkeln (κ) Korrekturdaten (Δx, Δy, Δz, Δr) für weitere Anstellwinkel (κ) berechnet werden, insbesondere für Anstellwinkel (κ), die zwischen den Anstellwinkeln (κ) liegen, für die Korrekturdaten gemessen wurden.

8. Verfahren nach Anspruch 7, wobei die Korrekturdaten (Δx, Δy, Δz, Δr) für die weiteren Anstellwinkel (κ) berechnet werden durch zumindest eines von: Interpolation, Extrapolation und mittels einer hinterlegten Korrekturfunktion.

9. Verfahren nach einem der vorangehenden Ansprüche, wobei der Schneideinsatz (2) eine Mehrzahl von zur Drehbearbeitung nutzbaren Schneidkantenabschnitten (22, 22', 22") hat und Korrekturdaten (Δx, Δy, Δz, Δr) für mehrere Schneidkantenabschnitte (22, 22', 22") gemessen werden.

10. Verfahren nach einem der vorangehenden Ansprüche, wobei das Messen der Korrekturdaten (Δx, Δy, Δz, Δr) durch Vermessen des eingebauten Werkzeugs (100) mit daran angeordnetem Schneideinsatz (2) erfolgt.

11. Verfahren nach einem der Ansprüche 1 bis 9, wobei das Messen der Korrekturdaten (Δx, Δy, Δz, Δr) durch Vermessen eines mit dem Werkzeug (100) gefertigten Bauteils erfolgt.

12. Verfahren nach einem der vorangehenden Ansprüche, wobei der Schneideinsatz (2) stirnseitig derart quer zu einer Längsachse (L) des Werkzeughalters (1) angeordnet ist, dass eine Flächennormale einer Spanfläche des Schneideinsatzes (2) eine Hauptrichtungskomponente parallel zu der Längsachse (L) des Werkzeughalters (1) aufweist.

13. Computerprogramm, das Anweisungen enthält zum Ansteuern einer Drehbearbeitung in einer Bearbeitungsmaschine mit einem Werkzeug (100), das einen in einer maschinenseitigen Aufnahme gehaltenen Werkzeughalter (1) mit einem daran befestigten auswechselbaren Schneideinsatz (2) aufweist, der zumindest einen zur Drehbearbeitung eines um eine Rotationsachse (Z) rotierenden Werkstücks (W) nutzbaren Schneidkantenabschnitt (22, 22', 22") mit zumindest einem abgerundeten Schneideckenbereich (22a) und zumindest einem an diesen Schneideckenbereich (22a) angrenzenden geraden ersten Schneidkantenbereich (22b) hat, derart, dass ein Anstellwinkel (κ), den der erste Schneidkantenbereich (22b) mit der Rotationsachse (Z) einschließt, durch eine Drehung des Werkzeughalters (1) um dessen Längsachse (L) oder eine dazu parallele Achse variiert wird,
wobei das Computerprogramm derart ausgebildet ist, dass Korrekturdaten (Δx, Δy, Δz, Δr) zur Kompensation von toleranzbedingten Positionsabweichungen des Schneidkantenabschnitts (22, 22', 22") für eine Mehrzahl von verschiedenen Anstellwinkeln (κ) eingebbar sind, um eine automatisierte Korrektur der Ansteuerung des Werkzeugs (1) bei der Drehbearbeitung in Abhängigkeit vom Anstellwinkel (κ) zu ermöglichen.

14. Computerprogramm nach Anspruch 13, wobei die Korrekturdaten (Δx, Δy, Δz, Δr) für zumindest drei verschiedene Anstellwinkel (κ) eingebbar sind, bevorzugt für zumindest fünf verschiedene Anstellwinkel (κ).

15. Computerprogramm nach Anspruch 13 oder 14, wobei die Korrekturdaten (Δx, Δy, Δz, Δr) für verschiedene Anstellwinkel (κ) eingebbar sind, die einen Anstellwinkelbereich von zumindest 90° abdecken, bevorzugt von zumindest 120°, mehr bevorzugt von zumindest 150°.

16. Computerprogramm nach einem der Ansprüche 13 bis 15, wobei die eingebbaren Korrekturdaten (Δx, Δy, Δz, Δr) zumindest für jeden der Mehrzahl von verschiedenen Anstellwinkeln (κ), der größer oder gleich 90° ist, zumindest Korrekturdaten (Δx, Δz) für zwei zueinander orthogonale Richtungen aufweisen, die Abweichung von Soll-Positionen (xₛₒₗₗ, zₛₒₗₗ) in diesen Richtungen bestimmen, bevorzugt zumindest Korrekturdaten (Δx, Δy, Δz) für drei zueinander orthogonale Richtungen.

17. Computerprogramm nach einem der Ansprüche 13 bis 16, wobei die Korrekturdaten (Δx, Δy, Δz, Δr) für jeden der Mehrzahl von verschiedenen Anstellwinkeln (κ) zumindest einen Korrekturwert (Δr) für einen Eckenradius aufweisen, der eine Abweichung von einem Soll-Eckenradius (rₛₒₗₗ) repräsentiert.

18. Computerprogramm nach einem der Ansprüche 13 bis 17, das basierend auf eingegebenen Korrekturdaten (Δx, Δy, Δz, Δr) für die Mehrzahl von verschiedenen Anstellwinkeln (κ) Korrekturdaten (Δx, Δy, Δz, Δr) für weitere Anstellwinkel (κ) berechnet, insbesondere für Anstellwinkel, die zwischen den Anstellwinkeln liegen, für die Korrekturdaten eingegeben wurden.

19. Computerprogramm nach Anspruch 18, wobei die Korrekturdaten (Δx, Δy, Δz, Δr) für die weiteren Anstellwinkel (κ) berechnet werden durch zumindest eines von: Interpolation, Extrapolation und mittels einer hinterlegten Korrekturfunktion.
